# EUROPÄISCHE PATENTSCHRIFT

(11) **EP 0 671 307 B1**
(45) Veröffentlichungstag und Bekanntmachung des Hinweises auf die Patenterteilung: **10.06.1998**
(21) Anmeldenummer: 95103098.0
(22) Anmeldetag: 04.03.1995
(51) Int. Cl.: B61D 17/04, B61D 17/10, B62D 31/02

(54) **Wagenkastenaufbau für Eisenbahn-Personenfahrzeuge**
Body structure for railway carriages
Superstructure de caisse pour voitures de voyageurs

(30) Priorität: 09.03.1994 DE 4407805
(43) Veröffentlichungstag der Anmeldung: 13.09.1995
(73) Patentinhaber: Waggonfabrik Talbot GmbH & Co.KG, 52070 Aachen (DE)
(72) Erfinder: Goerres, Franz Peter, Dipl.-Ing., D-52249 Eschweiler (DE)

(56) Entgegenhaltungen:
- EP-A- 0 379 310
- DE-A- 1 580 987
- FR-A- 1 330 389

## Beschreibung

Die Erfindung bezieht sich auf einen Wagenkastenaufbau für Eisenbahn-Personenfahrzeuge mit den Merkmalen des Oberbegriffs des Patentanspruchs 1.
Die FR-A-1 330 389 beschreibt eine Seitenwandkonstruktion aus Blech für EisenbahnReisezugwagen, deren längs erstreckte Bauteile zur Aussteifung an ihren oberen und unteren Rändern z-förmig abgekantet sind. Es ist jedoch nicht offenbart, wie die Verbindung der Seitenwand-Unterkante zum Wagenkasten-Untergestell gestaltet ist.

Aus der nachveröffentlichten EP-A-0 614 792 (Stand der Technik nach Artikel 54(3)EPÜ) ist ein Außenlangträger für zweiachsige Eisenbahngüterwagen bekannt, der im Querschnitt stoßfrei aus längs abgekantetem Blechmaterial besteht. Die Querträger des Untergestells sind auf eine abgekantete Stufe des Außenlangträgers auflegbar und daran zu befestigen. Dessen wesentliche Höhenerstreckung verläuft von der Ebene der Untergestell-Querträger abwärts, während die eigentlichen Seitenwände des Güterwagens separat an dem Untergestell bzw. dem Außenlangträger befestigt werden müssen.

Ein in DD 274 793 A1 beschriebener Wagenkastenaufbau umfaßt als Seitenwandteile Außenhautbleche mit integral angeformten Randprofilen zu ihrer Aussteifung und Verbindung mit angrenzenden Karosserie-Bauteilen. Sein Untergestell hat durch aufrechtstehende U-Profile gebildete Außen-Langträger.
Die mit dem Untergestell zu verbindenden Seitenwandteile werden mit ihren abgekanteten Randbereichen auf die vom Untergestell gebildete Plattform aufgesetzt und an dieser mittels kraftschlüssiger Verbindungselemente zusammengefügt.

Mit der DE 42 18 751 A1 wird eine Weiterentwicklung des vorstehend erörterten Wagenkastenaufbaus offenbart, bei dem das Untergestell mit seitlich angeordneten Schürzen versehen ist. Dabei sind seine Langträger so ausgebildet, daß sie sich der geometrischen Form der längsseitig folgenden Seitenwände anpassen. Folglich sind auch hier die Langträger noch am Untergestell selbst vorgesehen und von den Seitenwänden getrennt angeordnet.
Das Eigengewicht des Untergestells könnte mit solchen Konstruktionsmerkmalen noch weiter verringert werden, wenn dessen Eigensteifigkeit von den Seitenwänden stärker unterstützt würde.

In DE-Z "ETR" 41(1992), Heft 12, Seiten 831 bis 841, ist ein bei der Anmelderin entwikkeltes und in geschweißter Leichtbauweise ausgeführtes Fahrzeug beschrieben, bei dem als Langträger Z-Profile mit 120 mm Steghöhe verwendet werden. Diese relativ geringe Höhe kann an Stelle von Profilen Z200 verwendet werden, weil durch speziell ausgelegte Deformationszonen und -elemente sowie durch über dem Wagenquerschnitt umlaufende biegesteife Spante die Längsprofile und die Dach- und Bodenbleche des Rohbaus beim Auftreten von Stoßkräften gut zum Tragen herangezogen werden können.
Beim ausgeführten Fahrzeug ist das Z-Profil durchgehend 5 mm dick, die Seitenwand 2 mm, und beide Komponenten sind durch Längsschweißen miteinander verbunden.

Der Querschnitt einer anderen bekannten Wagenkasten-Bauart (EP 0 118 116 A1) ist im wesentlichen durch parallele rings umlaufende Spanten gebildet, die im Untergestellbereich durch separate Langträger miteinander verbunden sind und deren Außenumriß zur Bildung des im wesentlichen rechteckigen Querschnitts mit Blechen beplankt werden. Hierbei wird die Fensterteilung des Passagierraums vom Abstand der Spanten bestimmt.

Aus der nachveröffentlichten EP-A-0 614 792 ist schließlich ein Außenlangträger für zweiachsige Eisenbahngüterwagen bekannt, der im Querschnitt stoßfrei aus längs abgekantetem Blechmaterial besteht. Die Querträger des Untergestells sind auf eine abgekantete Stufe des Außenlangträgers auflegbar und darauf zu befestigen. Dessen wesentliche Höhenerstreckung verläuft von der Ebene der Untergestell-Querträger abwärts, während die eigentlichen Seitenwände des Güterwagens separat an dem Untergestell bzw. dem Außenlangträger befestigt werden müssen.

Der Erfindung liegt die Aufgabe zugrunde, ausgehend vom eingangs erörterten Stand der Technik eine Möglichkeit zur weiteren Reduzierung des Eigengewichts des Wagenkastens einschließlich des Untergestells bei geringem Fertigungsaufwand im Übergangsbereich zwischen Seitenwand und Untergestell anzugeben.

Diese Aufgabe wird erfindungsgemäß mit den kennzeichnenden Merkmalen des Anspruchs 1 gelöst.

Weil demnach die Querträger im Übergangsbereich zwischen Seitenwand und Untergestell unmittelbar mit den integral durch Abkantungen an den Unterkanten der Seitenwandteile ausgebildeten, sich über die ganze Fahrzeuglänge erstreckenden Langträgern zu verbinden sind, kann in diesem Bereich die Ausbildung von Doppelungen und damit das Gesamtgewicht des Wagenkastens merklich reduziert werden.

Die Merkmale der Unteransprüche geben vorteilhafte Weiterbildungen dieses Gegenstands an.
Insbesondere kann bei der insgesamt gewichtsparenden Konstruktion eine hohe Eigensteifigkeit der Wagenkastenröhre durch umlaufende, aus mehreren Stücken gebildete Spanten erreicht werden, wobei die Fensterteilung im Fensterband durch abschnittweise schrägen Verlauf der Spanten im unteren Seitenwandbereich je nach deren Schrägenwinkel gewählt werden kann.

Noch weitere Vorteile des Gegenstands der Erfindung gehen aus der Zeichnung eines Ausführungsbeispiels und deren sich im folgenden anschließender eingehender Beschreibung hervor.

Es zeigen in vereinfachter Darstellung
- Figur 1: Komponenten einer Wagenkastenhälfte gemäß der Erfindung im Querschnitt,
- Figur 2: eine perspektivische Querschnitt-Skizze eines Längenabschnitts oder Moduls des Wagenkastenrohbaus,
- Figur 3: eine Skizze analog zu Fig. 2 in weiterer Detaillierung mit einer Variante einer Fenstersäule.

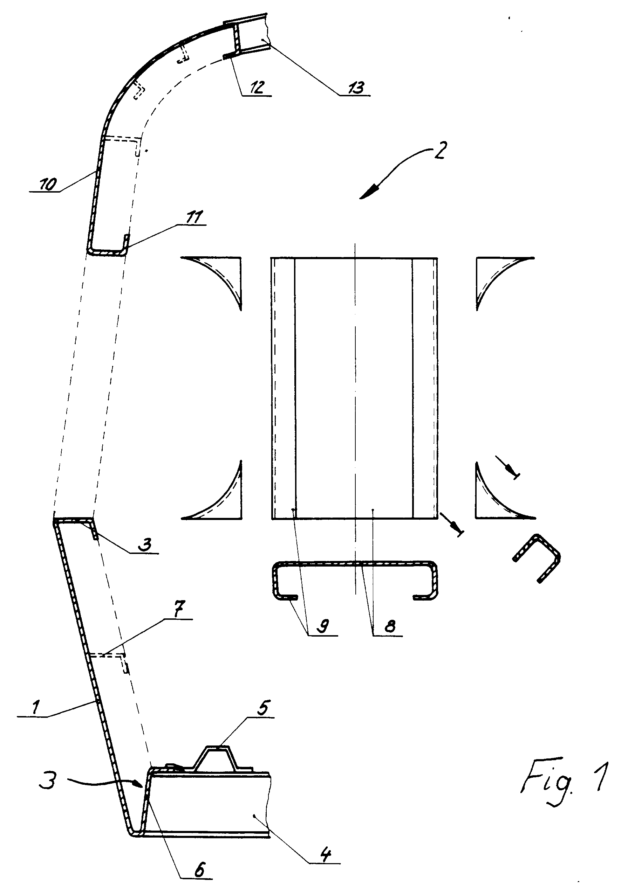

Ein Seitenwandteil 1 eines nur im Seitenwandbereich mit Blick in Fahrzeuglängsrichtung gezeigten Rohbau-Wagenkastens 2 ist gemäß **Figur 1** aus relativ dünnwandigem Blech (z. B. 2 mm stark) hergestellt und an seinen Außenrändern mit verschiedenen Abkantungen versehen. Diese bilden Randanschlüsse 3, mit denen zum einen integral die Eigensteifigkeit des Seitenwandteils erhöht wird und zum anderen das Anschließen benachbarter Bauteile -z. B. Bodenbeblechung und Fenstersäulen- durch Längsschweißen ermöglicht wird.

Ein Untergestell des Wagenkastens 2 wird hier im wesentlichen durch Querträger 4 repräsentiert, auf die der Wageninnenboden -z. B. aufgebaut auf Sickenblechen 5-aufgelegt wird. An den unteren Randbereich des Seitenwandteils 1 schließt sich als Randanschluß eine einstückige, vorzugsweise etwa z-förmige Abkantung 6 an, die den sonst üblichen separaten Außen-Langträger mit Profil- oder Kastenquerschnitt ersetzt. Ihr Mittelsteg ist -in Querrichtung des Wagenkastens projiziert- gleich hoch wie die Querträger 4, so daß deren Stirnseiten am Stoß problemlos angeschweißt werden können. Zusammen mit der Abkantung 6 bildet das flächige Seitenwandteil 1 einen Außenlangträger, der den aufkommenden Belastungen sicher gewachsen ist.
Der untere Teil des Wagenkastens bis zur Höhe der Fensterbrüstung bildet somit eine selbsttragende Wanne, die den sonst üblichen separaten Rahmen oder Rost aus Langträger-und Querträger-Profilen bei merklicher Reduzierung des Gewichts und des Schweißwärmeeintrags zu ersetzen vermag.

Das Seitenwandteil 1 kann durch nur gestrichelt angedeutete längslaufende Profile 7 weiter gegen Ausbeulen versteift werden, wobei diese Profile beim Ausbau des Wagenkastens gleichzeitig zum Haltern von Sitzuntergestellen herangezogen werden können.

Nach oben hin geht die Seitenwand in ein Fensterband über. Dessen Fensteröffnungen sind durch Fenstersäulen 8 begrenzt, die aus Blech gefertigt und ebenfalls an ihren fensterseitigen Rändern mit Abkantungen 9 versehen sind. An das Fensterband wiederum schließt sich eine Dachvoute 10 in entsprechender Blechausführung mit unterer Abkantung 11 (bildet den Obergurt des Fensterbandes) und oberer Abkantung 12 (am Dach) an. Mit der letzteren werden Dachspriegel 13 verschweißt, wobei diese Verbindung analog zu der Verbindung zwischen der Langträger-Abkantung 6 des Seitenwandteils 1 mit den Querträgem 4 ausgeführt wird.

Die längslaufenden Abkantungen 3 und 6 am Seitenwandteil 1 und 11 und 12 an der Dachvoute 10 können je nach vorhandenen Fertigungsmöglichkeiten an einem Stück über die gesamte Wagenlänge hergestellt oder an mehrere längsunterteilte Wand-und Vouten-Sektionen angeformt werden.

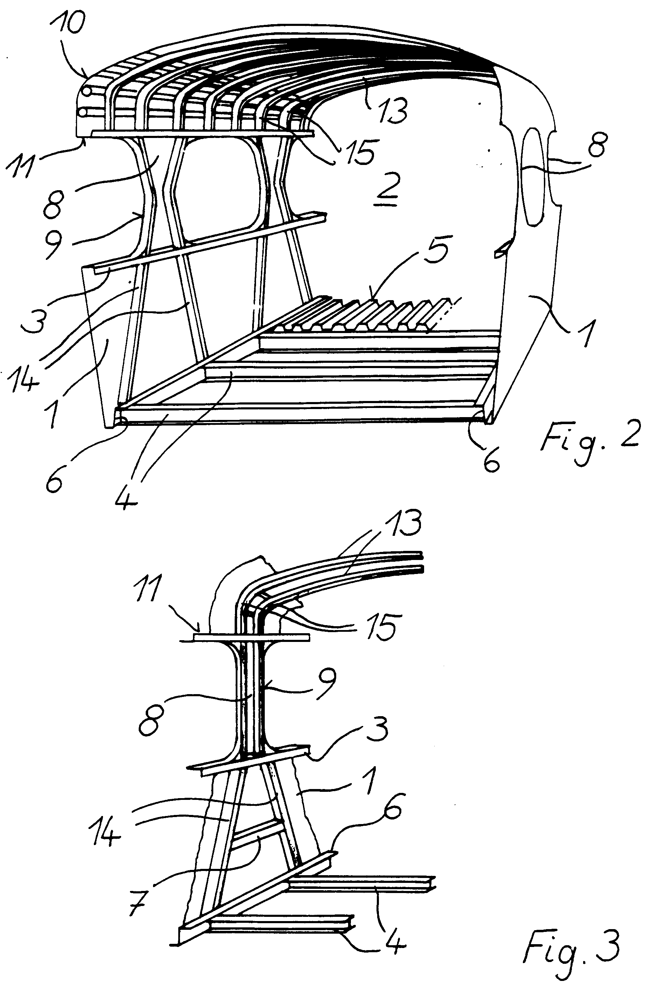

Die Querträger 4 sind, wie man in der perspektivischen Zusammenstellung in **Fig. 2** besser sieht, über die Wagenkastenlänge äquidistant (in untereinander gleichen Abständen) verteilt. Die Beblechung des Innenbodens kann jetzt relativ dünn und leicht ausgeführt werden, weil sie sich auf gleichmäßig kurz voneinander entfernte Auflager stützt.

In an sich bekannter Weise fußen auf den Enden der Querträger 4 Spantprofile 14, die das Seitenwandteil 1 in dessen Längsrichtung in relativ kleine und gleichmäßige Felder unterteilen und die darunterliegenden Querträger 4 direkt mit den Abkantungen 9 an den Seitenrändern der Fenstersäulen 8 verbinden. Da letztere im Sinne einer großflächigen Verglasung des Passagierraums schmaler sind als das Abstandsmaß der Querträger 4 untereinander, verlaufen nun die Spantprofile 14 in Querrichtung des Wagenkastens gesehen schräg an dem Seitenwandteil 1 hoch, wobei jeweils zwei Spantprofile 14 zu einer Fenstersäule 8 hin konvergieren.

Die als Fortsetzung der Spantprofile 14 anzusehenden Abkantungen 9 der Fenstersäulen 8 bzw. deren Ränder können gerade, wie in Fig. 1 oder 3 gezeigt, oder gemäß Fig. 2 geknickt bzw. gerundet verlaufen.
In der Dachvoute 9 wird der Verlauf der Spantprofile 14 wieder aufgenommen durch Voutenspantprofile 15, die sich jeweils an die oberen Enden der Fenstersäulen-Abkantungen 9 anschließen. Die andere Wagenkastenseite ist symmetrisch hierzu, so daß insgesamt mit den Dachspriegeln 13, die sich wiederum beidseitig an die Voutenspantprofile 15 anschließen, umlaufende Ringspanten (mit den Komponenten Querträger 4 - beidseits Spantprofile 13 - beidseits Abkantungen 9 - beidseits Voutenspantprofile 15 - Dachspriegel 13) gebildet werden. Diese sorgen für eine gute Aussteifung der Wagenkastenröhre und damit trotz reduzierten Eigengewichts für eine hohe Insassensicherheit.

In den Verlauf der besagten Ringspanten sind die verschiedenen Randanschlüsse 3 / 6 / 11 / 12 so einbezogen, daß eine gute Schweißanbindung zwischen den Ringspantkomponenten erzielt wird. Die in Fig. 1 nur gestrichelt angedeuteten längslaufenden Profile bilden, wie es in Fig. 3 angedeutet ist, bedarfsweise Querverbindungen zwischen den einzelnen Ringspanten.

Die in Fig. 2 gezeigte geknickte Ausführung der Abkantungen 9 an den Fenstersäulen 8 ermöglicht bei wabenförmigen Fensterausschnitten relativ weite Abstände zwischen den Dachspriegeln, so daß auch diese ähnlich wie die Querträger 4 in annähernd gleichmäßigen Abständen verteilt werden können. Über den relativ breiten Fensterausschnitten wird man, wie gezeigt, weitere Voutenspantprofile und entsprechende Dachspriegel anordnen.

In **Fig. 3** ist als Variante gezeigt, daß bei geradlinigen Abkantungen 9 der Fenstersäulen 8 die Voutenspantprofile 15 und die Dachspriegel 13 paarweise entsprechend geringere Abstände zueinander einhalten, wobei wiederum Zwischenspriegel oberhalb der Fensterausschnitte vorzusehen sind. Diese konstruktive Gestaltung hat gegenüber der vorerwähnten den Vorteil, daß konventionelle Fensterrahmen und -scheiben in abgerundeter Rechteckform eingesetzt werden können.

## Patentansprüche

1. Wagenkasten (2) für Schienenfahrzeuge, insbesondere für Reisezugwagen, mit einem Untergestell und aus Blech bestehenden flächigen Seitenwandteilen mit abgekanteten Längsrändern,
**dadurch gekennzeichnet,**
daß die abgekanteten Längsränder der sich vom Untergestell aufwärts erstreckenden Seitenwandteile (1) als Randanschlüsse (6) für Querträger (4) des Untergestells unter Einbeziehung der Fläche der Seitenwandteile (1) durchlaufende Außen-Langträger bilden, mit denen die Querträger (4) unmittelbar verbunden sind.

2. Wagenkasten nach Anspruch 1,
**dadurch gekennzeichnet**,
daß die Randanschlüsse am in Einbaulage unteren Rand jedes Seitenwandteils (1) als sich an den annähernd vertikalen Verlauf der Seitenwandfläche anschließende, z-förmige Abkantungen (6) ausgebildet sind, deren Mittelsteg in Wagenkasten-Querrichtung projiziert höhengleich mit den daran anzuschließenden Querträgern (4) ausgeführt ist.

3. Wagenkasten nach Anspruch 2,
**dadurch gekennzeichnet**,
daß eine auf die Querträger (4) aufzulegende Bodenbeblechung (5) mit einem auf die Querträger aufzulegenden Steg der Abkantung (6) längsverschweißbar ist.

4. Wagenkasten nach einem der vorstehenden Ansprüche,
**dadurch gekennzeichnet**,
daß die Querträger (4) untereinander äquidistant angeordnet sind und daß an den Seitenwandteilen (1) ferner Spantprofile (14) vorgesehen sind, die sich an die Querträger (4) anschließen.

5. Wagenkasten nach Anspruch 4,
**dadurch gekennzeichnet**,
daß zur Begrenzung von Fensterausschnitten in einem sich an den Seitenwandteil (1) oberseitig anschließenden Fensterband Fenstersäulen (8) vorgesehen sind, deren Breite geringer als der Abstand zwischen den untergestellseitigen Querträgern (4) ist und die an ihren fensterseitigen Rändern Abkantungen (9) aufweisen, welche durch die Spantprofile (14) an den Seitenwandteilen (1) mit den Querträgern (4) verbunden sind, wobei je zwei aufeinanderfolgende Spantprofile (14) aufwärts zu einer Fenstersäule (8) hin konvergierend verlaufen.

6. Wagenkasten nach Anspruch 5,
**dadurch gekennzeichnet**,
daß die Abkantungen der Fenstersäulen (8) in ihrer Längsrichtung geradlinig verlaufen.

7. Wagenkasten nach Anspruch 5,
**dadurch gekennzeichnet**,
daß die Abkantungen der Fenstersäulen (8) in ihrer Längsrichtung mindestens einen Knick aufweisen, wobei sich die schmalste Stelle der Fenstersäule etwa in deren Höhenmitte befindet.

8. Wagenkasten nach Anspruch 6 oder 7,
**dadurch gekennzeichnet**,
daß in einer sich oben an das Fensterband anschließenden Dachvoute (10) Voutenspantprofile (15) vorgesehen sind, die an einer Seite an den Längsverlauf der Abkantungen (9) der Fenstersäulen (8) und auf ihrer anderen Seite an Dachspriegel (13) angeschlossen sind.

9. Wagenkasten nach Anspruch 8,
**dadurch gekennzeichnet**,
daß oberhalb der Fensterausschnitte zusätzliche Dachvouten-Spantprofile und Dachspriegel angeordnet sind.

10. Wagenkasten nach einem der vorstehenden Ansprüche,
**dadurch gekennzeichnet**,
daß längslaufende Profile (7) zur seitlichen Aussteifung des Seitenwandteils (1) vorgesehen sind.

## Claims

1. Coach body (2) for rail vehicles, in particular for passenger coaches, having an underframe and sheet-like side-wall parts which consist of sheet metal and have bent-away longitudinal borders, characterized in that the bent-away longitudinal borders of the side-wall parts (1) extending upwards from the underframe form, as border connections (6) for transverse load-bearing members (4) of the underframe, together with the surface area of the side-wall parts (1), continuous outer longitudinal load-bearing members to which the transverse load-bearing members (4) are connected directly.

2. Coach body according to Claim 1, characterized in that, at that border of each side-wall part (1) which is at the bottom in the installed position, the border connections are designed as z-shaped bent-off sections (6) which adjoin the approximately vertical progression of the side-wall surface and of which the central web, projected in the transverse direction of the coach body, is configured to be the same height as the transverse load-bearing members which are to be connected there to (4).

3. Coach body according to Claim 2, characterized in that metal floor panelling (5) which is to be placed in position on the transverse load-bearing members (4) can be welded longitudinally to a web of the bent-off section (6) which is to be placed in position on the transverse load-bearing members.

4. Coach body according to one of the preceding claims, characterized in that the transverse load-bearing members (4) are arranged at equal distances apart from one another, and in that strengthening-rib profiles (14) are also provided on the side-wall parts (1), the said profiles adjoining the transverse load-bearing members (4).

5. Coach body according to Claim 4, characterized in that, in order to delimit window cutouts, window posts (8) are provided in a window strip which adjoins the side-wall parts (1) at the top, the window posts being of a width which is smaller than the distance between the transverse load-bearing members (4) of the underframe and, on their window-side borders, having bent-off sections (9) which are connected to the transverse load-bearing members (4) by the strengthening-rib profiles (14) on the side-wall parts (1), in each case two successive strengthening-rib profiles (14) converging upwards towards a window post (8).

6. Coach body according to Claim 5, characterized in that, in their longitudinal direction, the bent-off sections of the window posts (8) run in a rectilinear manner.

7. Coach body according to Claim 5, characterized in that, in their longitudinal direction, the bent-off sections of the window posts (8) have at least one bend, the narrowest point of the window post being located approximately half way up the latter.

8. Coach body according to Claim 6 or 7, characterized in that haunch rib profiles (15) are provided in a roof haunch (10) which adjoins the window strip at the top, the said profiles being connected, on one side, to the longitudinal progression of the bent-off sections (9) of the window posts (8) and, on their other side, to roof arches (13).

9. Coach body according to Claim 8, characterized in that additional roof-haunch rib profiles and roof arches are arranged above the window cutouts.

10. Coach body according to one of the preceding claims, characterized in that the longitudinally running profiles (7) are provided for the purpose of stiffening the side-wall part (1) laterally.

## Revendications

1. Caisse (2) pour véhicules ferroviaires, en particulier pour voitures de voyageurs, comprenant un châssis et des éléments de paroi latérale plats, en tôle, présentant des bords longitudinaux pliés, caractérisée en ce que les bords longitudinaux pliés des éléments (1) de paroi latérale s'étendant vers le haut à partir du châssis forment, corne raccords de bord (6) pour les traverses (4) du châssis, par l'intégration de la surface des éléments (1) de paroi latérale, des longerons externes continus auxquels les traverses (4) sont directement reliées.

2. Caisse selon la revendication 1, caractérisée en ce que les raccords de bord, au niveau du bord inférieur en position de montage, de chaque élément (1) de paroi latérale, sont réalisés sous la forme de pliures (6) en forme de z adjacentes au tracé presque vertical de la surface de la paroi latérale, dont la "Steg" intermédiaire projetée dans le sens transversal de la caisse a la même hauteur que les traverses (4) qui doivent y être raccordées.

3. Caisse selon la revendication 2, caractérisée en ce qu'un revêtement de plancher en tôle (5) à poser sur les traverses (4) peut être soudé longitudinalement à une "Steg" de la pliure (6) qui doit être posée sur les traverses.

4. Caisse selon l'une des revendications précédentes, caractérisée en ce que les traverses (4) sont disposées à égale distance l'une de l'autre et en ce que sur les éléments (1) de paroi latérale, sont en outre prévus des anneaux (14) de raidissement qui se raccordent aux traverses (4).

5. Caisse selon la revendication 4, caractérisée en ce que, pour limiter les baies de fenêtres dans une rangée de fenêtres qui est adjacente, par son côté supérieur, à l'élément (1) de paroi latérale, des montants (8) de fenêtre sont prévus dont la largeur est inférieure à la distance entre les traverses (4) situées du côté du châssis et qui présentent, à leurs bords tournés du côté des fenêtres, des pliures (9) qui sont reliées aux traverses (4) par les anneaux (14) de raidissement sur des éléments (1) de paroi latérale, chaque paire successive d'anneaux (14) de raidissement successifs s'étendant vers le haut en convergeant vers un montant (8) de fenêtre.

6. Caisse selon la revendication 5, caractérisée en ce que les pliures des montants (8) de fenêtre sont rectilignes dans leur sens longitudinal.

7. Caisse selon la revendication 5, caractérisée en ce que les pliures des montants (8) de fenêtre présentent, dans leur sens longitudinal, au moins une courbure, la partie la plus étroite du montant de fenêtre se trouvant approximativement au milieu de leur hauteur.

8. Caisse selon la revendication 6 ou 7, caractérisée en ce que, dans une voûte de toiture (10) se raccordant par le haut à la rangée de fenêtres, des cintres (15) de raidissement de voûte sont prévus qui sont fixés, d'un côté, dans le prolongement des pliures (9) des montants (8) de fenêtre et, de l'autre côté, aux cintres (13) de pavillon.

9. Caisse selon la revendication 8, caractérisée en ce que des cintres de raidissement de voûte de toiture et des cintres de pavillon supplémentaires sont disposés au-dessus des baies de fenêtre.

10. Caisse selon l'une des revendications précédentes, caractérisée en ce que des profilés longitudinaux (7) sont prévus pour assurer la rigidité latérale de l'élément (1) de paroi latérale.
